# EUROPÄISCHE PATENTANMELDUNG

(11) **EP 1 389 416 A2**
(43) Veröffentlichungstag der Anmeldung: **18.02.2004**
(21) Anmeldenummer: 03102038.1
(22) Anmeldetag: 08.07.2003
(51) Int. Cl.: A01F 12/44

(54) **Reinigungseinrichtung und Reinigungsgebläse für einen Mähdrescher**

(30) Priorität: 31.07.2002 US 209400
(71) Anmelder: DEERE & COMPANY, Moline, Illinois 61265-8098 (US)
(72) Erfinder: Grywacheski, Sheldon Joseph, 52749, Eldridge (US); Clifton, Kenneth Ralph, 61240, Coal Valley (US); Payne, Jeffrey Ray, IL 61265, Moline (US); Schlautman, Jeffrey Allan, 48446, Lapeer (US); Pope, Glenn, 61486, Viola (US)
(74) Vertreter: Holst, Sönke, Dr.

(57) **Zusammenfassung**

Die Erfindung bezieht sich auf eine Reinigungseinrichtung (26) für einen Mähdrescher (10), mit einem Siebkasten, der ein Hauptobersieb (44) und ein vorderes Obersieb (42) aufweist, das stromauf des Hauptobersiebs (44) angeordnet ist und im Betrieb gedroschene Bestandteile von Erntegut aufnimmt. Es wird vorgeschlagen, dass das vordere Obersieb (42) einen geschlossenen, nach oben geneigten Bereich (46) und einen mit Öffnungen versehenen, nach unten geneigten Bereich (48) aufweist.

Außerdem wird ein Reinigungsgebläse (30) für eine Reinigungseinrichtung (26) eines Mähdreschers (10) vorgeschlagen, das eine Vielzahl sich axial erstreckender Schaufeln (70) aufweist, die sich von einer Welle (72) radial nach außen erstrecken, wobei ein Einsatz (80) am Reinigungsgebläse (30) angebracht ist und einen axialen Luftdamm bildet, und dass der Einsatz (80) Öffnungen (82) aufweist, die den axialen Luftfluss über die Schaufeln (70) begrenzen.

## Beschreibung

Die Erfindung betrifft eine Reinigungseinrichtung für einen Mähdrescher, mit einem Siebkasten, der ein Hauptobersieb und ein vorderes Obersieb aufweist, das stromauf des Hauptobersiebs angeordnet ist und im Betrieb gedroschene Bestandteile von Erntegut aufnimmt, sowie ein Reinigungsgebläse für eine Reinigungseinrichtung eines Mähdreschers, das innerhalb eines Gehäuses angeordnet ist, das Öffnungen zur Aufnahme von Luft und Öffnungen aufweist, durch die ein Luftstrom einem Siebkasten zuführbar ist, wobei das Reinigungsgebläse eine Vielzahl sich axial erstreckender Schaufeln aufweist, die sich von einer Welle radial nach außen erstrecken.

Landwirtschaftliche Mähdrescher ernten Erntegut von einem Feld, dreschen es, um die großen Bestandteile des Ernteguts von den kleineren Bestandteilen des Ernteguts zu trennen und reinigen die kleineren Bestandteile, um die Spreu vom Korn zu trennen. Der Mähdrescher kann mit verschiedenen Erntevorsätzen ausgestattet sein, einschließlich (starren oder flexiblen) Schneidwerken zur Kornernte, Maispflückern, Erntevorsätzen zur Reihenfruchternte oder Schwadaufnehmerplattformen, abhängig von dem Erntegut und dem vom Landwirt genutzten Ernteverfahren. Analog kann der Dreschzusammenbau des Mähdreschers auf verschiedene Arten konfiguriert sein, einschließlich einer konventionellen, quer eingebauten Dreschtrommel mit einem Dreschkorb oder eines Rotordreschsystems, das entweder axial oder quer ausgerichtet ist. Außerdem können die Trennzusammenbauten konventionelle Strohschüttler oder Rotorzusammenbauten aufweisen.

Das Reinigungssystem entfernt die Spreu vom Korn. Das Reinigungssystem umfasst typischerweise einen Siebkasten und ein Reinigungsgebläse. Die kleineren Erntegutbestandteile vom Dreschzusammenbau und vom Trennzusammenbau werden dem Siebkasten zugeführt. Der Siebkasten ist typischweise mit einem Obersieb und einem Untersieb ausgestattet. Das Ober- und das Untersieb haben quer angeordnete Lamellen, die Öffnungen definieren. Die schwereren kleinen Körner fallen durch die von den Lamellen geformten Öffnungen im Obersieb und Untersieb. Der vom Reinigungsgebläse erzeugte Luftstrom bläst die Spreu an der Rückseite des Mähdreschers nach außen.

Es gibt drei Arten typischer Bewegungen des Siebkastens: Hinund Herbewegen, Schütteln und Kaskadieren. Bei einem sich hinund herbewegenden Siebkasten bewegen sich das Obersieb und das Untersieb in zueinander gegenläufigen Richtungen. Bei einem schüttelnden Siebkasten bewegen sich das Obersieb und das Untersieb in dieselbe Richtung. Bei einem kaskadierenden Siebkasten (engl. "cascading") sind das Obersieb und das Untersieb so angeordnet, dass das Material von einem Sieb in einer wasserfallartigen oder rollenden Bewegung auf das andere Sieb fällt.

Die der Erfindung zu Grunde liegende Aufgabe wird darin gesehen, eine Reinigungseinrichtung eines Mähdreschers bereitzustellen, die sich für hohe Durchsätze eignet.

Diese Aufgabe wird erfindungsgemäß durch die Lehre der Patentansprüche 1 und 11 gelöst, wobei in den weiteren Patentansprüchen Merkmale aufgeführt sind, die die Lösung in vorteilhafter Weise weiterentwickeln.

Der Siebkasten der Reinigungseinrichtung eines Mähdreschers wird mit einem vorderen Obersieb ausgestattet, das stromauf des Hauptobersiebs angeordnet ist. Das vordere Obersieb hat einen stromauf liegenden, geschlossenen Bereich und einen mit Öffnungen versehenen, stromab liegenden Bereich. Der stromauf liegende Bereich ist nach oben geneigt und der stromab liegende Bereich ist nach unten geneigt.

Das vordere Obersieb ist derart orientiert, dass ein Luftstrom von einem Reinigungsgebläse unterhalb des geschlossenen, stromauf liegenden Bereichs entlang und durch den nach unten geneigten, stromab liegenden Bereich nach oben strömt.

Der stromab gelegene, mit Öffnungen versehene Bereich kann mit vorzugsweise verstellbaren Lamellen ausgestattet sein, durch die der Luftstrom hindurchgeht. Korn und schwerere Teilchen fallen durch die Lamellen auf einen Prallboden, der diese Komponenten einem Hauptobersieb zuführt.

Alternativ oder zusätzlich wird ein Reinigungsgebläse vorgeschlagen, das innerhalb eines Gehäuses mit einer oder mehreren Luftstromöffnungen angeordnet ist, durch die ein Luftstrom zum Siebkasten gelangt. Eine erste Luftstromöffnung kann einen ersten Luftstrom entlang des vorderen Obersiebs führen, während eine zweite Luftstromöffnung einen zweiten Luftstrom entlang einer Prallpfanne leitet. Das Reinigungsgebläse umfasst eine Mehrzahl von sich radial und axial erstreckenden Schaufeln zum Luftfördern. Es wird vorgeschlagen, dass Einsätze, die Luftdämme oder -barrieren bilden, am Reinigungsgebläse angebracht sind. Sie unterbinden axiale Luftströme, so dass man einen über die Breite des Reinigungsgebläses etwa konstant starken Luftstrom erhält. Die Einsätze können mit Öffnungen versehen werden, die den axialen Luftfluss über die Schaufeln begrenzen.

In den Zeichnungen ist ein nachfolgend näher beschriebenes Ausführungsbeispiel der Erfindung dargestellt. Es zeigt:
- Fig. 1: eine Seitenansicht eines landwirtschaftlichen Mähdreschers, in dem die vorliegende Erfindung verwirklicht ist,

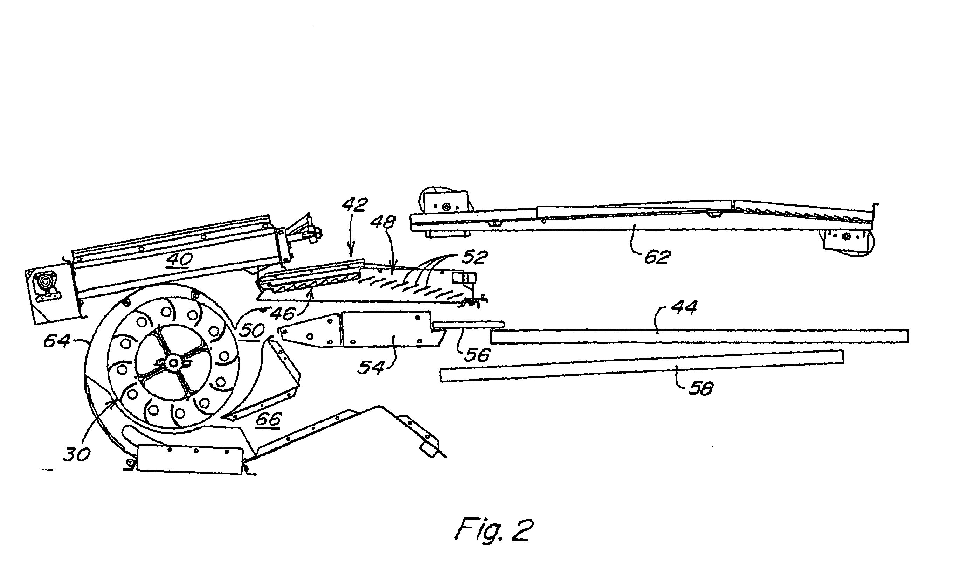

- Fig. 2: eine Seitenansicht eines Abschnitts des Reinigungszusammenbaus für einen Mähdrescher, und

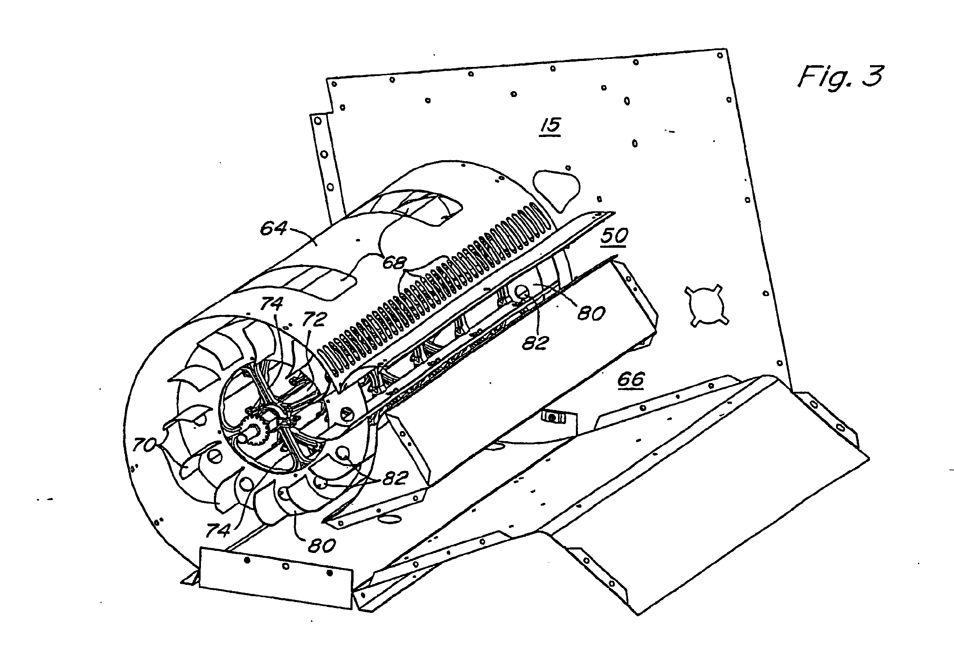

- Fig. 3: eine teilgeschnittene perspektivische Ansicht eines erfindungsgemäßen Reinigungsgebläses und Gehäuses.

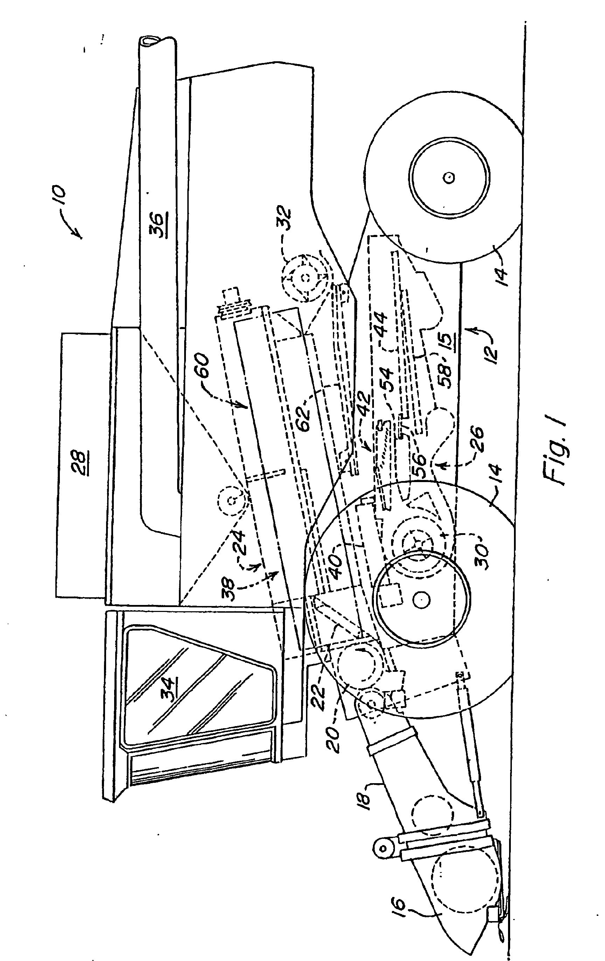

Voranzustellen ist, dass in der vorliegenden Offenbarung unter axialer Richtung die Vorwärtsfahrtrichtung des Mähdreschers verstanden wird, auf die sich auch die anderen Richtungsangaben beziehen. Die Figur 1 zeigt eine Seitenansicht eines selbstfahrenden landwirtschaftlichen Mähdreschers 10. Der Mähdrescher 10 umfasst einen Rahmen 12 mit Rädern 14 zum Abstützen und Vortrieb des Mähdreschers 10. Der Rahmen 12 umfasst zwei sich axial erstreckende Seitenbleche 15, zwischen denen die verschiedenen Verarbeitungszusammenbauten für das Erntegut angeordnet sind. Ein Schneidwerk 16 ist an der Vorderseite des Mähdreschers 10 angebracht und führt geerntetes Gut einem Schrägförderer 18 zu. Der Schrägförderer 18 enthält einen Förderer, um das geerntete Gut den Dresch-, Trenn- und Reinigungszusammenbauten zuzuführen, die zwischen den Seitenblechen 15 des Mähdreschers 10 angeordnet sind. Obwohl die vorliegende Erfindung als an einem Mähdrescher mit einer axial angeordneten Trennvorrichtung angebracht offenbart wird, kann sie auch an Mähdreschern mit Dreschtrommeln und Strohschüttlern und anderen Mähdrescherkonfigurationen mit einer Reinigungseinrichtung verwendet werden.

Bei dem dargestellten Mähdrescher führt der Schrägförderer 18 das geerntete Gut einer sich quer erstreckenden Leittrommel 20 zu, die das Gut durch einen Einlassübergangsbereich 22 einem axialen Dresch- und Trennzusammenbau 24 zuführt. Korn und Spreu werden vom axialen Dresch- und Trennzusammenbau 24 einem Reinigungszusammenbau 26 zugeführt. Der Reinigungszusammenbau 26 führt das saubere Korn wiederum einem Korntank 28 zu und die Spreu wird durch das Reinigungsgebläse 30 an der Rückseite des Mähdreschers hinaus geblasen. Erntegut, das weder Korn noch Spreu ist, wird vom axialen Dresch- und Trennzusammenbau 24 einer quer angeordneten Leittrommel 32 zugeführt, die das Material an der Rückseite des Mähdreschers 10 hinaus stößt. Zeitweise im Korntank 28 gespeichertes sauberes Korn kann durch Betätigung einer Entladeförderschnecke 36 durch einen Bediener in der Bedienerkabine 34 entladen werden.

Obwohl weniger offensichtlich als bei einem konventionellen Mähdrescher, ist der dargestellte Mähdrescher 10 mit einem Dreschzusammenbau 38 ausgestattet, der ein Gemisch mit hohem Korn- und geringem Spreuanteil produziert. Dieses kornreiche Gemisch wird axialen Schneckenförderern 40 zugeführt. Diese Schneckenförderer 40 führen dieses kornreiche Gemisch einem vorderen Obersieb 42 zu, das am Siebkasten befestigt ist und sich mit dem Hauptobersieb 44 bewegt. Das kornreiche Gemisch von den Schneckenförderern 40 fällt auf den geschlossenen, stromauf liegenden Bereich 46 des vorderen Obersiebs 42. Der geschlossene, stromauf liegende Bereich 46 ist nach oben geneigt. Die obere Oberfläche des geschlossenen stromauf liegenden Bereichs 46 ist mit Stufen versehen, um das kornreiche Gemisch nach oben und hinten zu fördern, wenn das vordere Obersieb 42 durch den Siebkasten hin- und herbewegt wird. Die Hin- und Herbewegung treibt das kornreiche Gemisch zu einem mit Öffnungen versehenen, stromab liegenden Bereich 48 des vorderen Obersiebs 42. Ein Luftstrom vom Reinigungsgebläse 30 wird durch eine erste Luftstromöffnung 50 auf die untere Oberfläche des geschlossenen stromauf liegenden Bereichs 46 des vorderen Obersiebs 42 geleitet. Der mit Öffnungen versehene, stromauf liegende Bereich 48 ist mit einer Vielzahl an sich quer erstreckenden Lamellen 52 versehen, die die Öffnungen definieren, durch die das schwerere Korn fallen kann. Der Luftstrom aus der ersten Luftstromöffnung 50 folgt der unteren Oberfläche des geschlossenen, stromauf liegenden Bereichs 46, bis er auf die untere Oberfläche des stromab liegenden Bereichs 48 trifft. Die nach unten gerichtete Neigung des stromab liegenden Bereichs 48 und die Lamellen 52 leiten einen Teil des Luftstroms durch den stromab liegenden Bereich 48 nach oben, um die Spreu nach hinten zu blasen und das Korn zwischen den Lamellen 52 durchzulassen.

Das vom stromab liegenden, mit Öffnungen versehenen Bereich 48 des vorderen Obersiebs 42 fallende Korn wird von einem Prallboden 54 aufgefangen. Der Prallboden 54 wird auch mit dem Siebkasten hin- und herbewegt und ist mit Stufen ausgestattet, die das vom Prallboden 54 aufgenommene Korn und die Spreu nach oben und hinten zu Fingerstäben 56 treiben. Das Korn fällt entweder durch die Fingerstäbe 56 auf das Untersieb 58 oder das Korn und die Spreu werden entlang der Fingerstäbe 56 auf das Hauptobersieb 44 gefördert. Das Hauptobersieb 44 und das Untersieb 58 reinigen das Korn weiter, indem sie Spreu vom Korn freisetzen, so dass sie an der Rückseite des Mähdreschers 10 durch den vom Reinigungsgebläse 30 erzeugten Luftstrom hinausgeblasen werden können.

Das Gemisch mit hohem Spreuanteil vom Trennabschnitt 60 wird dem vorderen Obersieb 42 durch einen Boden 62 zugeführt. Wegen des Luftstroms, der durch den offenen, stromab liegenden Abschnitt 48 des vorderen Obersiebs 42 strömt, erreicht ein Teil dieses Gemischs mit hohem Spreuanteil nicht das vordere Obersieb 42 und wird nach hinten direkt auf das Hauptobersieb 44 geblasen.

Das Reinigungsgebläse 30 ist in einem Gehäuse 64 angeordnet, das die erste Luftstromöffnung 50 definiert, um einen ersten Luftstrom unterhalb das vordere Obersieb 42 zu leiten, und eine zweite Luftstromöffnung 66, um einen zweiten Luftstrom unter den Prallboden 54 und zum Hauptobersieb 44 zu leiten. Ungefähr achtzig Prozent des Luftvolumens des Reinigungsgebläses 30 fließt durch die zweite Luftstromöffnung 66, während die verbleibenden zwanzig Prozent des Luftvolumens durch die erste Luftstromöffnung 50 fließen. Das Gehäuse 64 umfasst eine umfängliche Wand, die sich zwischen den Seitenblechen 15 erstreckt. Die Seitenbleche 15 haben Öffnungen, durch die Luft in die seitlichen Enden des Reinigungsgebläses 30 gefördert werden kann. Außerdem ist die umfängliche Wand mit stromauf der ersten Luftstromöffnung 50 angeordneten Öffnungen 68 ausgestattet, um dem Reinigungsgebläse Luft radial zuzuführen.

Das Reinigungsgebläse 30 umfasst eine Vielzahl an sich quer (d. h. bezüglich seiner Längsachse axial) und radial erstreckenden Schaufeln 70, die durch eine Reihe sich radial erstreckender Elemente 74 an einer mittigen Welle 72 befestigt sind. Das Reinigungsgebläse 30 definiert einen Zylinder mit ersten und zweiten seitlichen Enden, die in der Nähe der Seitenbleche 15 des Mähdreschers 10 angeordnet sind. Typischerweise ist der größte Luftfluss für ein Reinigungsgebläse 30 (quer zur Fahrtrichtung betrachtet) an seiner Mitte mit einem vermindertem Luftfluss an den seitlichen Enden, da ein Teil des Luftstroms sich quer über die Schaufeln 70 bewegt, wenn das Reinigungsgebläse 30 Luft fördert. Um diesen Fluss zu vermindern, sind erste und zweite Einsätze 80 nahe der seitlichen Enden des Reinigungsgebläses 30 befestigt, um Luft an diesen Enden zu halten, die durch die Öffnungen in den Seitenblechen eingezogen wird. Auf diese Weise stellen die Einsätze 80 einen in seitlicher Richtung gleichförmigeren Luftstrom über das Reinigungsgebläse 30 bereit. Die Einsätze 80 bilden einen Luftdamm mit Öffnungen 82, die den seitlichen (d. h. bezüglich der Längsachse des Reinigungsgebläses 30 axialen) Luftstrom entlang der Schaufeln 70 begrenzen. Die Einsätze 80 sind flache Ringe. Die Anzahl der Öffnungen 82 entspricht der Anzahl der Schaufeln 70, so dass einige Luft seitlich über alle Schaufeln 70 strömt.

## Patentansprüche

1. Reinigungseinrichtung (26) für einen Mähdrescher (10), mit einem Siebkasten, der ein Hauptobersieb (44) und ein vorderes Obersieb (42) aufweist, das stromauf des Hauptobersiebs (44) angeordnet ist und im Betrieb gedroschene Bestandteile von Erntegut aufnimmt, **dadurch gekennzeichnet, dass** das vordere Obersieb (42) einen geschlossenen, nach oben geneigten Bereich (46) und einen mit Öffnungen versehenen, nach unten geneigten Bereich (48) aufweist.

2. Reinigungseinrichtung (26) nach Anspruch 1, **dadurch gekennzeichnet, dass** der mit Öffnungen versehene Bereich (48) mit einer Reihe sich quer zur Flussrichtung erstreckender Lamellen (52) ausgestattet ist.

3. Reinigungseinrichtung (26) nach Anspruch 1 oder 2, **dadurch gekennzeichnet, dass** der geschlossene, nach oben geneigte Bereich (46) stromauf des mit Öffnungen versehenen, nach unten geneigten Bereichs (48) angeordnet ist.

4. Reinigungseinrichtung (26) nach einem der Ansprüche 1 bis 3, **dadurch gekennzeichnet, dass** ein Prallboden (54) stromab des vorderen Obersiebs (42) und stromauf des Hauptobersiebs (44) angeordnet ist.

5. Reinigungseinrichtung (26) nach Anspruch 4, **dadurch gekennzeichnet, dass** ein Reinigungsgebläse (30) einen Luftstrom zwischen dem Prallboden (54) und dem vorderen Obersieb (42) erzeugt.

6. Reinigungseinrichtung (26) nach einem der Ansprüche 1 bis 5, **dadurch gekennzeichnet, dass** ein Reinigungsgebläse (30) einen ersten Luftstrom an der unteren Oberfläche des geschlossenen Bereichs (46) des vorderen Obersiebs (42) erzeugt.

7. Reinigungseinrichtung (26) nach einem der Ansprüche 1 bis 6, **dadurch gekennzeichnet, dass** ein Reinigungsgebläse (30) einen ersten Luftstrom an der Unterseite des mit Öffnungen versehenen Bereichs (48) des vorderen Obersiebs (42) erzeugt, wo ein Teil des Luftstroms auf den mit Öffnungen versehenen Bereich (48) trifft und durch die Öffnungen hindurchtritt.

8. Reinigungseinrichtung (26) nach einem der Ansprüche 1 bis 7, **dadurch gekennzeichnet, dass** ein Reinigungsgebläse (30) einen zweiten Luftstrom erzeugt, der entlang des Prallbodens (54) und durch das Hauptobersieb (44) strömt.

9. Reinigungseinrichtung (26) nach Anspruch 8, **dadurch gekennzeichnet, dass** der zweite Luftstrom größer als der erste Luftstrom ist.

10. Mähdrescher (10) mit einer Reinigungseinrichtung (26) nach einem der vorhergehenden Ansprüchen, mit einer Drescheinrichtung, die einen ersten Gutstrom gedroschenen Ernteguts erzeugt und einer Trenneinrichtung, die einen zweiten Gutstrom gedroschenen Ernteguts erzeugt, wobei der erste Gutstrom der Oberseite des nach oben geneigten Bereich (46) und/oder der zweite Gutstrom (48) der Oberseite des nach unten geneigten Bereich (48) des vorderen Obersiebs (42) zugeführt wird.

11. Reinigungsgebläse (30) für eine Reinigungseinrichtung (26) eines Mähdreschers (10), das innerhalb eines Gehäuses (64) angeordnet ist, das Öffnungen (68) zur Aufnahme von Luft und Öffnungen (50, 66) aufweist, durch die ein Luftstrom einem Siebkasten zuführbar ist, wobei das Reinigungsgebläse (30) eine Vielzahl sich axial erstreckender Schaufeln (70) aufweist, die sich von einer Welle (72) radial nach außen erstrecken, **dadurch gekennzeichnet, dass** ein Einsatz (80) am Reinigungsgebläse (30) angebracht ist und einen axialen Luftdamm bildet, und dass der Einsatz (80) Öffnungen (82) aufweist, die den axialen Luftfluss über die Schaufeln (70) begrenzen.

12. Reinigungsgebläse (30) nach Anspruch 11, **gekennzeichnet durch** zwei nahe der beiden Enden angeordnete Einsätze (80).

13. Reinigungsgebläse (30) nach Anspruch 11 oder 12, **dadurch gekennzeichnet, dass** der Einsatz (80) einen flachen Ring umfasst, der mit Öffnungen (82) versehen ist, die den Schaufeln (70) entsprechen.

14. Reinigungsgebläse (30) nach einem der Ansprüche 11 bis 13, **dadurch gekennzeichnet, dass** das Gehäuse (64) mit einer ersten Luftstromöffnung (50) ausgestattet ist, durch die ein erster Luftstrom fließt, und mit einer zweiten Luftstromöffnung (66), durch die ein zweiter Luftstrom fließt, und dass die Luftströme dem Siebkasten zugeführt werden.

15. Reinigungsgebläse (30) nach einem der Ansprüche 11 bis 14, **dadurch gekennzeichnet, dass** das Gehäuse (64) quer angeordnete Seitenwände hat, einschließlich Seitenblechen (15) eines Mähdreschers (10), wobei die Seitenbleche (15) Öffnungen haben, die den seitlichen Enden des Reinigungsgebläses (30) entsprechen, um ihm Luft zuzuführen.

16. Reinigungsgebläse (30) nach Anspruch 15, **dadurch gekennzeichnet, dass** das Gehäuse (64) umfängliche Wände aufweist, die sich zwischen den Seitenblechen (15) erstrecken und das Reinigungsgebläse (30) umschließen, und dass die Wände stromauf der ersten Luftstromöffnung (50) eine Mehrzahl an Öffnungen (68) aufweisen.
